# DEMANDE DE BREVET EUROPEEN

(11) **EP 0 539 823 A1**
(43) Date de publication de la demande: **05.05.1993**
(21) Numéro de dépôt: 92117814.1
(22) Date de dépôt: 19.10.1992
(51) Int. Cl.: B62D 5/04

(54) **Dispositif de commande de direction d'un véhicule**

(30) Priorité: 29.10.1991 FR 9113458
(71) Demandeur: SMH Management Services AG, CH-2501 Biel (CH)
(72) Inventeur: Müller, Jacques, CH-2732 Reconvilier (CH); Béroud Claude, CH-2738 Court (CH); Edye, Thomas, CH-2017 Boudry (CH)
(74) Mandataire: de Montmollin, Henri

(57) **Abrégé**

Le dispositif de commande de direction du véhicule comporte un organe de commande de direction (9) actionnable par le conducteur et un dispositif d'asservissement (DA) comprenant deux capteurs (8, 11) fournissant chacun un signal de détection (SR, SM) représentatif, respectivement, de la position angulaire des roues directrices (1, 2) du véhicule et de la position de l'organe de commande (9), un moteur (7) destiné à faire pivoter les roues directrices (1, 2) en réponse à un signal de commande (SC), et un circuit d'asservissement (12) produisant ce signal de commande en réponse aux signaux de détection (SR, SM).

Le dispositif de commande de direction comporte en outre un organe de couplage (13) capable de relier mécaniquement l'organe de commande de direction (9) aux roues directrices (1, 2) lorsque le dispositif d'asservissement (DA) ne fonctionne pas correctement, afin que, dans un tel cas, le conducteur garde le contrôle de la direction de son véhicule.

## Description

La présente invention concerne un dispositif de commande de direction d'un véhicule ayant au moins une roue directrice mobile angulairement par rapport à un axe de pivotement pour déterminer la direction de déplacement de ce véhicule, et plus particulièrement un tel dispositif présentant une grande sécurité de fonctionnement.

Comme la plupart des véhicules de ce genre comportent deux roues directrices, et parfois même plus, il ne sera fait mention dans la description qui va suivre que "des roues directrices" afin de ne pas charger inutilement cette description. Mais on verra sans difficulté que la présente invention s'applique sans changement aux véhicules ne comportant qu'une seule roue directrice.

Le conducteur d'un tel véhicule dispose évidemment d'un organe de commande de direction qu'il peut actionner pour faire pivoter les roues directrices de son véhicule par rapport à leurs axes de pivotement, et donc pour diriger ce véhicule. Dans la plupart des cas, cet organe est constitué par un volant que le conducteur peut faire tourner autour d'un axe. Dans d'autres cas, cet organe n'est pas constitué par un volant mais, par exemple, par une manette que le conducteur du véhicule peut déplacer, parallèlement à elle-même ou en la faisant pivoter autour d'un axe, dans un plan qui est, par exemple, perpendiculaire à l'axe longitudinal du véhicule.

Dans la plupart des véhicules du genre défini ci-dessus, l'asservissement de la position angulaire des roues directrices à la position de l'organe de commande de direction est assuré par un dispositif purement mécanique.

On a déjà proposé de réaliser cet asservissement à l'aide d'un dispositif comportant un circuit électrique ou électronique d'asservissement commandant un moteur lié mécaniquement aux roues directrices en réponse à des signaux électriques respectivement représentatifs de l'angle de pivotement de ces roues et de la position de l'organe de commande de direction, ces signaux étant fournis à ce circuit par des capteurs de position respectivement liés mécaniquement à ces roues et à cet organe.

Dans le reste de la présente description, un tel dispositif sera appelé "dispositif d'asservissement électrique" et le circuit électrique ou électronique qu'il comporte sera appelé "circuit d'asservissement".

Dans un dispositif de commande de direction utilisant un tel dispositif d'asservissement électrique, il n'y a pas de liaison mécanique entre les roues directrices du véhicule et son organe de commande de direction.

Il faut noter que, dans toute la présente description, le terme "liaison mécanique" entre un premier et un deuxième élément, ici les roues directrices d'une part et l'organe de commande de direction d'autre part , doit être compris comme désignant une liaison fonctionnelle réalisée entièrement à l'aide de composants mécaniques et grâce à laquelle tout déplacement de l'un des éléments se traduit par un déplacement correspondant de l'autre élément, et non pas comme désignant la liaison qui résulte simplement du fait que ces deux éléments font partie du même véhicule.

Un dispositif de commande de direction d'un véhicule comportant un dispositif d'asservissement électrique présente le très grave inconvénient de priver le conducteur du véhicule de tout contrôle sur la direction de celui-ci en cas de fonctionnement incorrect de ce dispositif d'asservissement électrique, ce terme de fonctionnement incorrect désignant évidemment aussi le non-fonctionnement complet du dispositif. Un tel fonctionnement incorrect du dispositif d'asservissement électrique peut être causé, par exemple, par une diminution importante, ou la disparition, de sa tension d'alimentation ou encore par une défaillance de l'un des composants du circuit d'asservissement ou de l'un des capteurs de position.

Un but de la présente invention est de proposer un dispositif de commande de direction d'un véhicule qui ne présente pas l'inconvénient du dispositif connu décrit ci-dessus, c'est-à-dire un dispositif qui permet au conducteur du véhicule de garder le contrôle de la direction de ce dernier même en cas de fonctionnement incorrect du dispositif d'asservissement électrique.

Ce but est atteint par le dispositif selon l'invention, qui est un dispositif de commande de direction d'un véhicule ayant au moins une roue directrice mobile angulairement par rapport à un axe de pivotement pour déterminer la direction de déplacement dudit véhicule, ce dispositif de commande de direction comportant un organe de commande de direction actionnable par le conducteur dudit véhicule pour diriger ledit véhicule et un dispositif d'asservissement électrique de la position angulaire de cette roue à la position de cet organe de commande de direction comprenant un premier détecteur de position couplé mécaniquement à ladite roue pour produire un premier signal de détection représentatif de la position angulaire de ladite roue par rapport audit axe de pivotement, un deuxième détecteur de position couplé mécaniquement audit organe de commande de direction pour produire un deuxième signal de détection représentatif de la position dudit organe de commande de direction, des moyens moteurs couplés mécaniquement à ladite roue pour la faire pivoter autour dudit axe de pivotement en réponse à un signal de commande, et un circuit d'asservissement produisant ledit signal de commande en réponse audit premier et audit deuxième signal de détection.

Selon la présente invention, ce dispositif de commande de direction est caractérisé par le fait qu'il comporte en outre des premiers moyens reliés mécaniquement à l'organe de commande de direction du véhicule, des deuxièmes moyens reliés mécaniquement à la roue directrice, et des moyens de couplage pour relier mécaniquement ces premiers moyens et ces deuxièmes moyens en cas de fonctionnement incorrect du dispositif d'asservissement électrique de la position angulaire de la roue directrice à la position de l'organe de commande de direction.

Grâce à ces caractéristiques du dispositif de commande de direction selon la présente invention, le conducteur du véhicule garde le contrôle de la direction de celui-ci même en cas de fonctionnement incorrect du dispositif d'asservissement électrique.

Dans une des formes d'exécution du dispositif de commande de direction selon l'invention, celui-ci est caractérisé par le fait :
- que lesdits premiers moyens comportent un premier organe mécanique solidaire dudit organe de commande de direction,
- que lesdits deuxièmes moyens comportent un deuxième organe mécanique disposé à proximité dudit premier organe mécanique et relié mécaniquement à ladite roue, et des moyens pour guider ledit deuxième organe mécanique de manière que ses déplacements en réponse aux pivotements de ladite roue soient parallèles aux déplacements dudit premier organe mécanique, et
- que lesdits moyens de couplage comportent un logement ménagé dans l'un desdits premier et deuxième organes mécaniques et des moyens solidaires de l'autre desdits premier et deuxième organes mécaniques et destinés à coopérer avec ledit logement pour relier mécaniquement lesdits premiers moyens et lesdits deuxièmes moyens en cas de fonctionnement incorrect dudit dispositif d'asservissement.

Dans une autre forme d'exécution du dispositif de commande de direction selon l'invention, celui-ci est caractérisé par le fait que lesdits moyens solidaires de l'autre desdits premier et deuxième organes mécaniques comportent un élément de couplage mobile et un organe de verrouillage coopérant avec ledit élément de couplage pour le maintenir dans une première position où il n'est pas engagé dans ledit logement lorsque ledit dispositif d'asservissement fonctionne correctement et pour le libérer lorsque ledit dispositif d'asservissement ne fonctionne pas correctement, lesdits moyens de couplage comportant en outre des moyens élastiques agissant sur ledit élément de couplage pour l'amener, lorsqu'il est libéré par ledit organe de verrouillage, dans une deuxième position où il est au moins partiellement engagé dans ledit logement .

D'autres buts et avantages du dispositif de la présente invention seront rendus évidents par la description qui va en être faite à l'aide du dessin annexé dans lequel :
- la figure 1 représente schématiquement et partiellement un véhicule comportant un dispositif de commande de direction selon l'invention;
- la figure 2 est une vue de dessus schématique d'une partie des éléments d'une première forme d'exécution du dispositif de la figure 1;
- les figures 3 et 4 sont des vues schématiques en coupe du dispositif de la figure 2, faites respectivement selon l'axe III-III et selon l'axe IV-IV de cette figure 2;
- la figure 5 est une vue de dessus, schématique et partielle, d'une partie des éléments d'une autre forme d'exécution du dispositif de la figure 1;
- la figure 6 est une vue schématique en coupe selon l'axe VI-VI de la figure 5 dans laquelle les divers éléments sont représentés dans la position qu'ils occupent en cas de fonctionnement correct du dispositif d'asservissement;
- la figure 7 est également une vue schématique en coupe selon l'axe VI-VI de la figure 5 mais dans laquelle les divers éléments sont représentés dans la position qu'ils occupent en cas de fonctionnement incorrect du dispositif d'asservissement;
- la figure 8 est une vue de dessus, schématique et partielle, d'une partie des éléments d'une autre forme d'exécution du dispositif de la figure 1;
- les figures 9 et 10 sont des vues schématiques en coupe selon les axes IX-IX et X-X, respectivement, de la figure 8, dans lesquelles les divers éléments sont représentés dans la position qu'ils occupent en cas de fonctionnement correct du dispositif d'asservissement;
- les figures 11 et 12 sont également des vues schématiques en coupe selon les axes IX-IX et X-X, respectivement, de la figure 8, mais dans lesquelles les divers éléments sont représentés dans la position qu'ils occupent en cas de fonctionnement incorrect du dispositif d'asservissement;
- les figures 13, 14 et 15 représentent schématiquement et partiellement des véhicules comportant d'autres dispositifs de commande de direction selon l'invention;
- la figure 16 est une vue de côté, schématique et partielle, d'une partie des éléments de la forme d'exécution du dispositif de la figure 15; et
- la figure 17 est une vue en bout des éléments représentés à la figure 16.

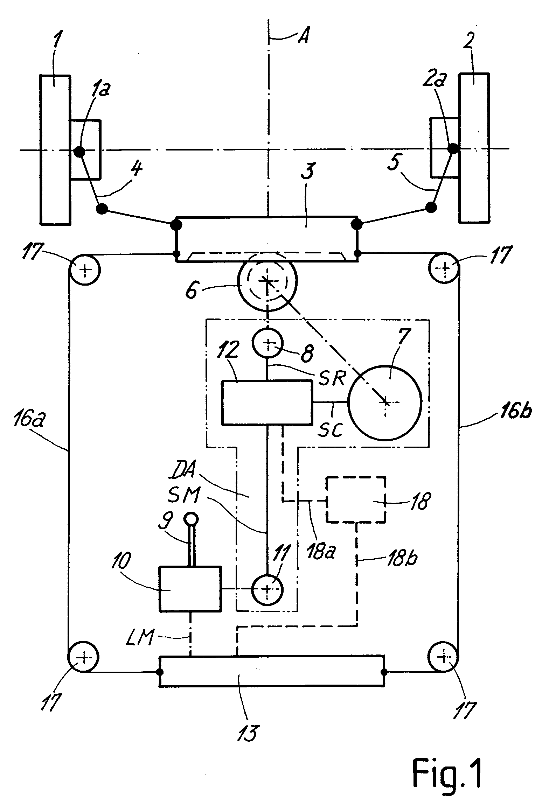

Le véhicule représenté schématiquement et partiellement à la figure 1 comporte deux roues directrices 1 et 2 fixées à un essieu, non représenté, de manière à pouvoir tourner, chacune, autour d'un pivot 1a, respectivement 2a, d'axe sensiblement vertical, c'est-à-dire sensiblement perpendiculaire au plan de cette figure 1.

Les roues 1 et 2 sont toutes deux couplées mécaniquement à une crémaillère 3 par des barres de direction articulées, désignées par les références 4 et 5, qui ne sont représentées que de manière symbolique et ne seront pas décrites en détail car il s'agit d'éléments bien connus des spécialistes.

La crémaillère 3 est guidée par des glissières non représentées qui ne lui permettent qu'un déplacement dans le sens de sa longueur, et les barres 4 et 5 sont agencées de manière que les roues 1 et 2 pivotent autour des axes 1a et 2a, dans le même sens, en réponse à ce déplacement de cette crémaillère 3.

Les dents de la crémaillère 3 sont en prise avec une roue dentée 6 qui est elle-même couplée mécaniquement au rotor d'un moteur électrique 7. Ce rotor n'a pas été représenté séparément. Dans l'exemple représenté, cette roue dentée 6 est reliée au rotor du moteur 7 par un train d'engrenages symbolisé par un trait mixte, mais elle peut également être fixée directement à l'arbre du rotor du moteur 7.

Un capteur de position 8 fournissant un signal électrique représentatif de la position angulaire des roues 1 et 2, désigné par la référence SR, est relié mécaniquement, dans l'exemple de la figure 1, à la roue dentée 6. Il faut noter que ce capteur 8 peut évidemment être relié mécaniquement à n'importe quel point de la chaîne cinématique qui relie le moteur 7 aux roues directrices 1 et 2, pourvu que cette liaison soit telle qu'il fournisse le signal désiré.

Dans le véhicule de la figure 1, l'organe de commande de direction que le conducteur peut actionner pour diriger ce véhicule est constitué par une manette 9 qui s'étend, par exemple, sensiblement verticalement depuis la surface supérieure de l'un des accoudoirs du siège du conducteur, dans une position telle que ce conducteur peut aisément la déplacer vers la gauche ou vers la droite pour diriger son véhicule.

Cette manette 9 est fixée à un support 10 qui peut coulisser dans une glissière, non représentée dans la figure 1, de manière que cette manette 9 se déplace parallèlement à elle-même, entre deux positions extrêmes, dans un plan sensiblement vertical et perpendiculaire à l'axe longitudinal A du véhicule.

Le support 10 est couplé mécaniquement à un capteur de position 11 qui fournit un signal électrique SM représentatif de la position de ce support 10 et donc de la manette 9.

Ce signal électrique SM représentatif de la position de la manette 9, ainsi que le signal électrique SR représentatif de la position angulaire des roues 1 et 2 fourni par le capteur 8, sont appliqués à un circuit d'asservissement électrique ou électronique 12.

Ce circuit d'asservissement 12 ne sera pas décrit ici car il s'agit d'un circuit bien connu de l'homme du métier qui peut en outre être réalisé de nombreuses manières. On mentionnera simplement que ce circuit d'asservissement est agencé de manière à répondre aux signaux SM et SR pour fournir au moteur 7 un signal de commande SC tel que les roues 1 et 2 ont en permanence une position angulaire correspondant à la position de la manette 9.

L'ensemble comprenant les capteurs de position 8 et 11, le circuit 12 et le moteur 7 forme donc un dispositif d'asservissement électrique tel que défini ci-dessus, et il est désigné par la référence DA.

Le dispositif de commande de direction de la figure 1 comporte en outre un organe de couplage 13, dont un exemple sera décrit plus loin, qui coulisse dans une glissière, non représentée dans la figure 1, située à proximité de la glissière dans laquelle coulisse le support 10 de la manette 9 et parallèle à cette dernière glissière.

Cet organe de couplage 13 est relié mécaniquement à la crémaillère 3 par deux câbles 16a et 16b passant sur des poulies de guidage 17. La disposition et le nombre de ces poulies 17 dans la figure 1 est tout à fait symbolique et arbitraire, leur disposition et leur nombre dépendant évidemment de la disposition réelle de la crémaillère 3 et de l'organe de couplage 13 dans le véhicule.

Les câbles 16a et 16b peuvent également être disposés dans des gaines déformables en flexion mais rigides dans le sens de leur longueur. Dans un tel cas, les poulies de guidage 17 n'existent évidemment pas.

Les câbles 16a et 16b peuvent aussi être remplacés par n'importe quels autres organes de liaison souples tels que des courroies.

En outre, l'un des câbles 16a et 16b peut être supprimé et remplacé par des moyens de rappel élastique tels que des ressorts fixés de manière adéquate à l'organe de couplage 13 et, respectivement , à la crémaillère 3.

Comme cela sera décrit en détail plus loin, le support 10 de la manette 9 et l'organe de couplage 13 sont agencés de manière qu'il n'y ait aucune liaison mécanique entre eux tant que le dispositif d'asservissement DA fonctionne correctement, et de manière qu'une liaison mécanique s'établisse entre ce support 10 et cet organe 13 lorsque ce dispositif d'asservissement DA ne fonctionne pas correctement. Cette liaison mécanique est symbolisée par le trait mixte désigné par la référence LM dans la figure 1.

Dans certaines de ses formes d'exécution, le dispositif de la figure 1 peut comporter en outre un circuit de surveillance capable de détecter si le fonctionnement du dispositif d'asservissement DA est correct ou non, et de réaliser d'autres fonctions, qui peuvent être différentes d'une forme d'exécution à l'autre, en dépendance de cette détection. Un tel circuit de surveillance est représenté en traits interrompus à la figure 1 avec la référence 18.

On voit que tant que le dispositif d'asservissement DA fonctionne correctement, le circuit d'asservissement 12 répond aux signaux SM et SR qu'il reçoit respectivement des capteurs de position 11 et 8 en fournissant le signal SC au moteur 7. En réponse à ce signal SC, le rotor du moteur 7 tourne et entraîne le pivotement des roues 1 et 2 par l'intermédiaire de la roue dentée 6, de la crémaillère 3 et des barres de direction 4 et 5 jusqu'à ce que ces roues 1 et 2 prennent une position angulaire correspondant à la position de la manette 9.

En même temps, le rotor du moteur 7 entraîne l'organe de couplage 13 par l'intermédiaire de la crémaillère 3 et des câbles 16a et 16b.

Pour une raison qui sera rendue évidente par la suite de cette description, l'organe de couplage 13 est relié au rotor du moteur 7 par l'intermédiaire de la crémaillère 3 et des câbles 16a et 16b de manière que, lorsque le conducteur déplace la manette 9 dans un sens ou dans l'autre pour diriger son véhicule, cet organe de couplage 13 se déplace dans le même sens que cette manette 9, sans pour autant qu'il y ait de liaison mécanique entre cette dernière et cet organe 13.

Lorsque le dispositif d'asservissement DA ne fonctionne pas correctement, la liaison mécanique LM entre l'organe de couplage 13 et le support 10 de la manette 9 est établie, et tout déplacement de la manette 9 est alors transmis aux roues 1 et 2 par l'intermédiaire de l'organe de couplage 13, des câbles 16a et 16b, de la crémaillère 3 et des barres de direction 4 et 5. Le conducteur du véhicule garde donc le contrôle de la direction de celui-ci, même en cas de fonctionnement incorrect du dispositif d'asservissement DA.

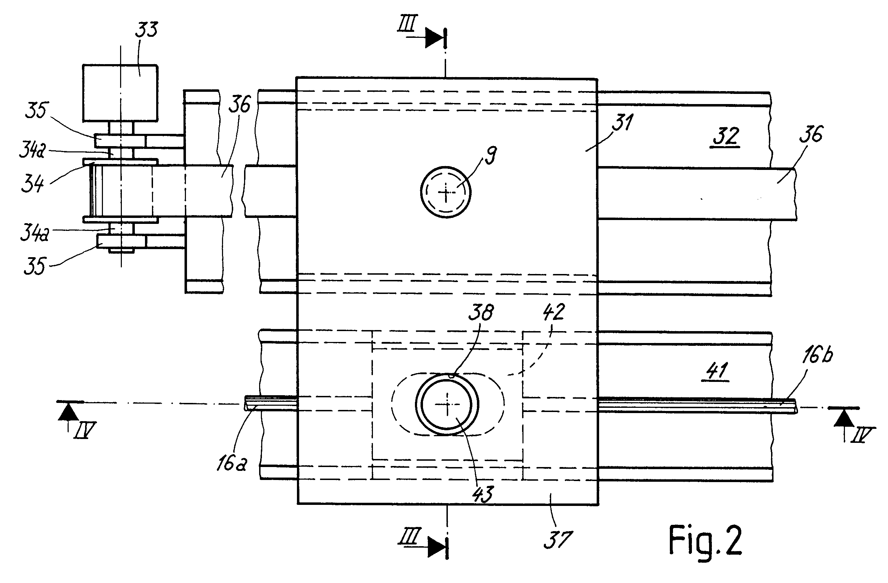

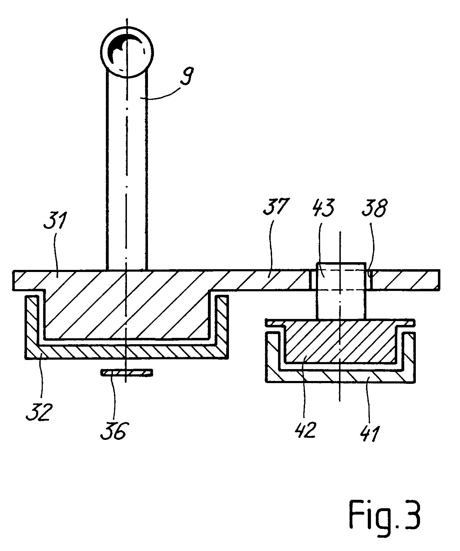

Dans la forme d'exécution du dispositif de la figure 1 représentée partiellement et schématiquement par les figures 2 à 4, la manette 9 que le conducteur du véhicule actionne pour diriger ce dernier est fixée rigidement, d'une manière qui n'a pas été représentée, à la surface supérieure d'un chariot 31 qui constitue le support désigné par la référence 10 dans la figure 1.

Ce chariot 31 est monté dans une glissière 32 de manière à ne pouvoir se déplacer que dans la direction de la longueur de cette glissière 32, qui est fixée à un support, non représenté, disposé par exemple dans un des accoudoirs du siège du conducteur du véhicule. Les moyens assurant le maintien et le guidage du chariot 31 dans la glissière 32 n'ont pas non plus été représentés car ils peuvent être constitués par n'importe lesquels des moyens bien connus des spécialistes dans ce domaine.

Le capteur de position de la manette 9, désigné par la référence 11 dans la figure 1, est constitué dans cet exemple par un potentiomètre cylindrique 33 dont le curseur est solidaire de l'arbre 34a d'une poulie 34. Cet arbre 34a tourne dans des paliers 35 fixés, d'une manière qui n'a pas été représentée en détail, à une extrémité de la glissière 32.

La liaison mécanique entre le potentiomètre 33 et le chariot 31 est assurée par une courroie 36 dont les deux extrémités sont fixées à ce chariot 31 d'une manière qui n'a pas été représentée et qui passe sur la poulie 34 et sur une autre poulie, également non représentée, semblable à cette dernière et fixée à l'autre extrémité de la glissière 32.

Le chariot 31 est prolongé latéralement par une plaque 37 comportant un logement 38 constitué, dans cet exemple, par un trou cylindrique traversant cette plaque 37. Cette plaque a été représentée comme ne formant qu'une seule pièce avec ce chariot 31 mais il est évident qu'elle peut également ne pas former une seule pièce avec ce chariot 31 et être fixée rigidement à ce dernier.

Une glissière 41 est disposée sous la plaque 37, à une certaine distance de cette dernière, de manière que son axe longitudinal soit parallèle à celui de la glissière 32. Cette glissière 41 peut être fixée, par exemple, au même support que la glissière 32.

Un chariot 42 est monté dans la glissière 41 de manière à ne pouvoir se déplacer que dans la direction de la longueur de cette glissière 41. Les moyens assurant le maintien et le guidage du chariot 42 dans la glissière 41 n'ont pas été représentés car ils peuvent être constitués par n'importe lesquels des nombreux moyens bien connus des spécialistes dans ce domaine.

Une tige cylindrique 43 ayant un diamètre inférieur à celui du logement 38 est fixée à la surface supérieure du chariot 42, perpendiculairement à cette surface, et traverse au moins partiellement ce logement 38.

Il faut noter que, comme cela sera rendu évident par la suite de cette description, le logement 38 et la tige 43 ne doivent pas obligatoirement être cylindriques, mais que l'un et/ou l'autre peuvent parfaitement avoir une forme différente. Le logement 38 peut d'ailleurs être constitué par une encoche de forme appropriée ménagée dans le bord de la plaque 37, cette dernière ayant, dans ce cas, une largeur inférieure à celle qu'elle a dans la figure 2.

Le chariot 42, qui constitue l'organe de couplage désigné par la référence 13 à la figure 1, est relié à la crémaillère 3 par les câbles 16a et 16b, également représentés dans la figure 2, qui ont chacun une extrémité fixée à ce chariot 42 d'une manière qui n'a pas été représentée.

Dans cette forme d'exécution, le dispositif d'asservissement DA et le train d'engrenage qui relie le moteur 7 à la crémaillère 3 sont agencés de manière que, lorsque ce dispositif d'asservissement DA fonctionne correctement, tout déplacement de la manette 9 provoque un déplacement du chariot 42 ayant non seulement le même sens que celui de cette manette 9 mais encore la même amplitude que ce dernier.

Grâce à cette caractéristique, et toujours lorsque le dispositif d'asservissement DA fonctionne correctement, la tige 43 reste concentrique au logement 38 et ne touche pas les bords de ce dernier, quels que soient les déplacements de la manette 9. Tout déplacement de la manette 9 provoque donc un pivotement des roues 1 et 2 par l'intermédiaire du dispositif d'asservissement DA, sans qu'il y ait de liaison mécanique entre cette manette 9 et ces roues 1 et 2.

Lorsque le dispositif d'asservissement DA ne fonctionne pas correctement, les déplacements de la manette 9 ne provoquent plus le pivotement des roues 1 et 2, et le chariot 42 ne se déplace plus dans le même sens et/ou de la même quantité que la manette 9. La tige 43 vient donc s'appuyer d'un côté ou de l'autre du logement 38, ce qui relie mécaniquement la plaque 37, et donc le chariot 31 et la manette 9, au chariot 42 et aux roues 1 et 2 par l'intermédiaire des câbles 16a et 16b, de la crémaillère 3 et des barres de direction 4 et 5. En d'autres termes, la liaison mécanique LM de la figure 1 est constituée, dans ce cas, par la tige 43 et le logement 38.

Le conducteur du véhicule garde donc le contrôle de la direction de ce dernier même en cas de fonctionnement incorrect du dispositif d'asservissement DA.

Il est possible que, en cas de fonctionnement incorrect du dispositif d'asservissement DA, le moteur 7 soit alimenté en permanence et provoque l'application à la manette 9 d'une force qui s'oppose à celle que le conducteur doit appliquer à cette manette 9 pour diriger son véhicule. Pour éviter cet inconvénient, il est souhaitable de compléter le dispositif de la figure 1 par le circuit de surveillance 18 mentionné ci-dessus et d'agencer ce circuit 18 de manière qu'il soit capable d'interrompre la liaison électrique entre le circuit d'asservissement 12 et le moteur 7 lorsqu'il détecte un fonctionnement incorrect du dispositif d'asservissement DA, afin que, dans un tel cas, ce moteur 7 ne soit certainement plus alimenté et ne s'oppose pas à la force que le conducteur doit alors exercer sur la manette 9 pour diriger son véhicule.

La liaison entre le circuit de surveillance 18 et le circuit d'asservissement 12 nécessaire à la réalisation de cette fonction est symbolisée dans la figure 1 par le trait interrompu 18a.

Ce circuit de surveillance 18 ne sera pas décrit plus en détail, car sa constitution dépend de celle des divers éléments du dispositif d'asservissement DA. En outre, un tel circuit de surveillance est bien connu des spécialistes. Pour les mêmes raisons, les autres circuits de surveillance qui seront mentionnés plus loin ne seront pas non plus décrits en détail.

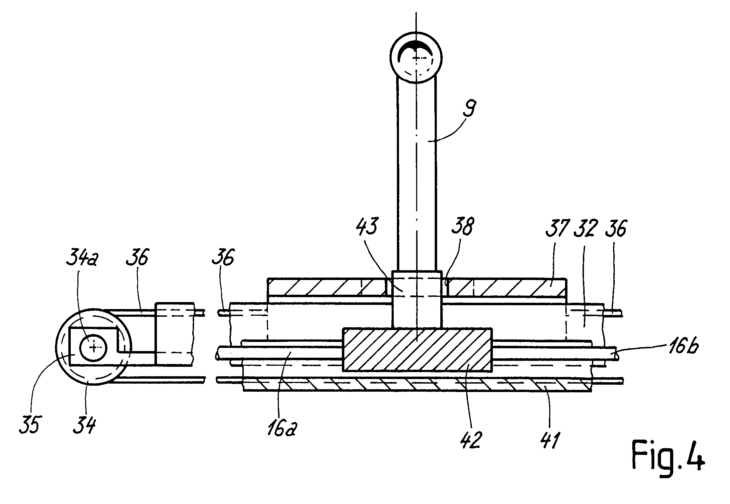

Il peut être difficile d'ajuster les divers composants du dispositif d'asservissement DA, et notamment le circuit d'asservissement 12, de manière que le chariot 42 se déplace toujours exactement à la même vitesse que la manette 9 lorsque le conducteur du véhicule déplace cette dernière et que le dispositif d'asservissement DA fonctionne correctement. Il peut donc arriver que, pendant un déplacement de la manette 9, la tige 43 vienne s'appuyer contre la paroi du logement 38 même si ce dispositif d'asservissement DA fonctionne correctement, ce qui risque de gêner le conducteur du véhicule. Dans un tel cas, on peut donner au logement 38 une forme allongée dans le sens des déplacements de la manette 9 et du chariot 42 comme cela est représenté en traits interrompus dans les figures 2 et 4.

Dans ce cas, la longueur de ce logement 38 doit évidemment être déterminée de manière que la tige 43 ne vienne jamais en contact avec la paroi de ce logement 38 tant que le dispositif d'asservissement DA fonctionne correctement.

Dans un tel cas, si le dispositif d'asservissement DA ne fonctionne plus correctement, le conducteur du véhicule doit évidemment déplacer la manette 9 sur une certaine distance avant que la tige 43 vienne en contact avec la paroi du logement 38 et qu'il reprenne donc le contrôle de la direction de son véhicule. Mais si cette distance est faible, elle peut être parcourue très rapidement, de sorte cet allongement du logement 38 ne présente en général pas d'inconvénient.

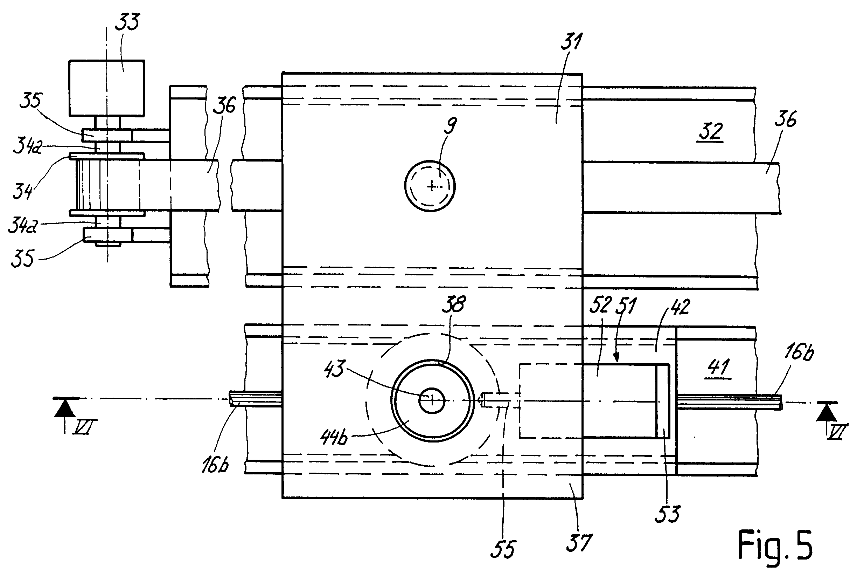

Dans la forme d'exécution du dispositif de la figure 1 représentée partiellement et schématiquement par les figures 5 à 7, les divers éléments désignés par les références 9, 16a, 16b, 31 à 38 et 41 à 43 sont semblables à ceux qui sont désignés par les mêmes références dans les figures 2 à 4 et ne seront pas décrits à nouveau.

En plus de la tige 43, les moyens de liaison mécanique LM de la figure 1 comportent dans ce cas un élément de couplage 44 pouvant coulisser le long de la tige 43 grâce à un trou cylindrique qui le traverse et qui a un diamètre légèrement supérieur à celui de cette tige 43.

Cet élément de couplage 44 comporte deux parties cylindriques 44a et 44b toutes les deux coaxiales à la tige 43. La partie 44a est située du côté du chariot 42, et son diamètre extérieur est supérieur à celui-ci du logement 38. La partie 44b est située du côté de la plaque 37, et son diamètre extérieur est inférieur à celui de ce logement 38.

Il faut noter que, dans ce cas également, le logement 38 et la partie 44b de l'élément de couplage 44 ne doivent pas obligatoirement être cylindriques, mais que l'une et/ou l'autre peuvent parfaitement avoir une forme différente, la seule condition à remplir étant que la partie 44b de l'élément de couplage 44 puisse s'introduire dans le logement 38 dans des circonstances qui seront décrites plus loin. La tige 43 peut également ne pas être cylindrique, l'ouverture centrale de l'élément de couplage 44 devant alors évidemment avoir une forme correspondante.

Pour une raison qui sera rendue évidente par la suite de cette description, la hauteur totale de l'élément 44 est inférieure à la distance qui sépare la face supérieure du chariot 42 de la face inférieure de la plaque 37.

Un ressort en spirale 48 est disposé autour de la tige 43 et comprimé entre la face supérieure du chariot 42 et le fond d'un logement 44c ménagé dans la partie 44a de l'élément 44.

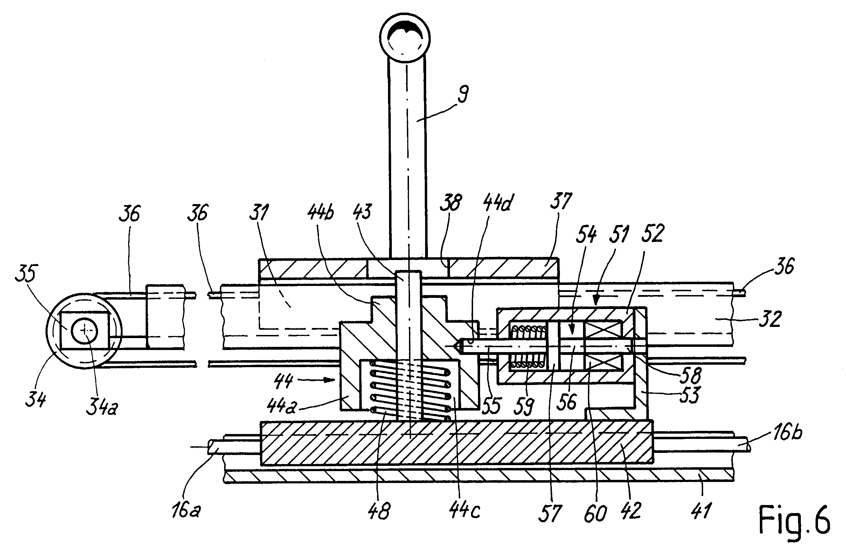

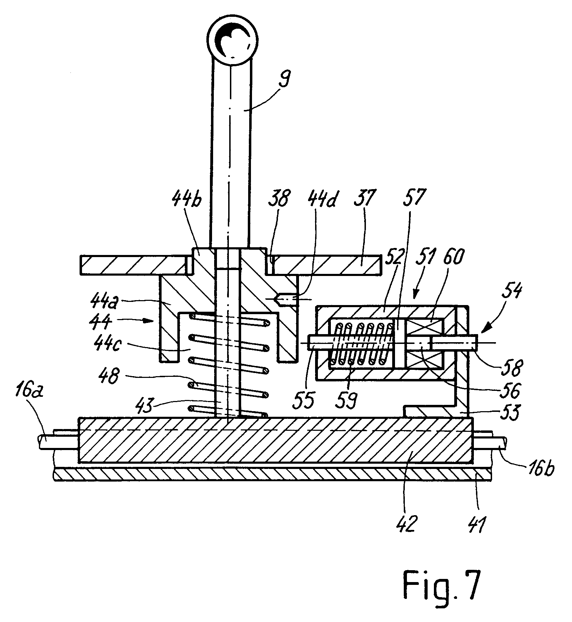

Cet élément 44 est retenu dans la position représentée à la figure 6 par un organe de verrouillage qui sera décrit plus loin, et il est poussé par le ressort 48 jusqu'à la position représentée à la figure 7 dans des circonstances qui seront également décrites plus loin.

Les moyens de liaison mécanique LM de la figure 1 comportent encore un organe électromécanique de verrouillage 51 comprenant un boîtier cylindrique 52 fixé au chariot 42 par l'intermédiaire d'un support 53 de manière que l'axe de ce boîtier 52 coupe l'axe de la tige 43 à angle droit.

Les moyens de fixation de ce boîtier 52 à ce support 53 et de ce dernier au chariot 42, qui peuvent être constitués par de simples vis, n'ont pas été représentés pour ne pas charger inutilement le dessin.

L'organe de verrouillage 51 comporte encore un verrou 54 disposé partiellement dans le boîtier 52. Ce verrou 54 comporte deux tiges 55 et 56, cylindriques et coaxiales au boîtier 52, réunies par un épaulement 57, également cylindrique et coaxial au boîtier 52. Pour une raison qui sera rendue évidente par la suite de cette description, la tige 56, au moins, est en un matériau non magnétique.

La tige 56 est prolongée par une autre tige, 58, également cylindrique et coaxiale au boîtier 52. Cette tige 58 a le même diamètre que la tige 56 et, contrairement à cette dernière, elle est en un matériau magnétique doux, pour une raison qui sera également rendue évidente par la suite de cette description.

Le verrou 54 peut se déplacer axialement dans le boîtier 52 grâce au fait que le diamètre de l'épaulement 57 est légèrement inférieur au diamètre intérieur du boîtier 52, et que des trous sont percés dans les extrémités de ce boîtier 52 pour laisser passer les tiges 55 et 58.

Dans la position représentée aux figures 5 et 6, l'extrémité de la tige 55 est engagée dans un trou borgne 44d percé dans la paroi extérieure de l'élément de couplage 44 et empêche ainsi cet élément 44 de se déplacer en direction de la plaque 37 sous l'action du ressort 48.

L'organe de verrouillage 51 comporte encore un ressort en spirale 59 disposé dans le boîtier 52 autour de la tige 55 et comprimé entre l'épaulement 57 et le fond de ce boîtier 52 situé du côté de l'élément de couplage 44, ainsi qu'une bobine 60 disposée à l'autre extrémité du boîtier 52 et entourant au moins une partie de la tige 58.

Le diamètre intérieur de cette bobine 60 est légèrement supérieur au diamètre des tiges 56 et 58, de manière que ces dernières puissent se déplacer axialement dans des circonstances qui seront décrites plus loin.

Dans cette forme d'exécution, le dispositif de la figure 1 comporte également un circuit de surveillance 18 qui, dans ce cas, est agencé de manière à alimenter la bobine 60 tant que le fonctionnement du dispositif d'asservissement DA est correct, et à interrompre cette alimentation dès qu'il détecte que ce fonctionnement est incorrect. Pour réaliser cette fonction, le circuit de surveillance 18 est relié à cette bobine 60 par des conducteurs symbolisés dans la figure 1 par le trait interrompu 18b. Ces conducteurs n'ont pas été représentés dans les figures 5 à 7.

Le circuit de surveillance 18, le ressort 59 et la bobine 60 sont dimensionnés de manière que, lorsque le verrou 54 est dans la position représentée à la figure 6 où l'extrémité de la tige 55 est engagée dans le trou 44d de l'élément de couplage 44, et tant que le dispositif d'asservissement DA fonctionne correctement et que la bobine 60 est donc alimentée par le circuit de surveillance 18, le champ magnétique produit par cette bobine 60 est tel que la force qu'il exerce sur la tige 58 est suffisante pour maintenir ce verrou 54 dans cette position à l'encontre de la force exercée par le ressort 59 sur l'épaulement 57.

Dans ce cas, il n'y a évidemment pas de liaison mécanique entre la manette 9 et les roues 1 et 2 du véhicule.

Lorsque le circuit de surveillance 18 détecte un fonctionnement incorrect du dispositif d'asservissement DA et interrompt l'alimentation de la bobine 60, le champ magnétique produit par cette bobine 60 et la force exercée par ce champ sur la tige 58 disparaissent, et le verrou 54 se déplace sous l'action du ressort 59 jusqu'à la position représentée à la figure 7. La tige 55 sort donc du trou 44d, ce qui permet au ressort 48 de pousser l'élément de couplage 44 jusqu'à la position représentée à cette figure 7 dans laquelle il relie mécaniquement la plaque 37, et donc la manette 9, aux roues 1 et 2 par l'intermédiaire de la tige 43, du chariot 42, des câbles 16a et 16b, de la crémaillère 3 et des barres de direction 4 et 5.

Il est évident que, dans cette forme d'exécution également, il est nécessaire que les divers éléments du dispositif de la figure 1 soient agencés de manière que le chariot 42 se déplace toujours de la même quantité que la manette 9 lorsque le dispositif d'asservissement DA fonctionne correctement, afin que la partie 44b de l'élément de couplage 44 puisse pénétrer dans le logement 38 lorsque le circuit de surveillance 18 détecte un fonctionnement incorrect de ce dispositif d'asservissement DA.

Comme dans le cas de la forme d'exécution décrite ci-dessus à l'aide des figures 2 à 4, il est possible de donner au logement 38 une forme allongée dans le sens du déplacement de la manette 9 et du chariot 42 pour éviter d'avoir à remplir strictement cette condition.

On a vu ci-dessus que, lorsque le dispositif d'asservissement DA ne fonctionne pas correctement, le conducteur du véhicule doit déplacer la manette 9 jusqu'à ce que la tige 43 ou l'élément de couplage 44 vienne en contact avec la paroi du logement 38 pour reprendre le contrôle de la direction de son véhicule.

La longueur de ce déplacement de la manette 9 est égale, dans le pire des cas, à la longueur du logement 38 diminuée du diamètre de la tige 43 ou de la partie 44b de l'élément de couplage 44.

Or il n'est pas toujours possible et/ou souhaitable d'agencer les divers éléments du dispositif de la figure 1 de manière que l'organe de couplage 13 se déplace au moins à peu près de la même quantité que la manette 9 lorsque le dispositif d'asservissement DA fonctionne correctement.

Il est alors nécessaire de donner au logement 38 une longueur assez grande pour que la tige 43 ou l'élément de couplage 44 ne vienne jamais en contact avec l'une ou l'autre des extrémités de ce logement 38 lorsque le dispositif d'asservissement DA fonctionne correctement.

Il en découle que, dans de tels cas, la distance que le conducteur doit faire parcourir à la manette 9 pour reprendre le contrôle de la direction de son véhicule lorsque le dispositif d'asservissement DA ne fonctionne plus correctement peut être suffisamment grande pour que la sécurité de conduite de ce véhicule ne soit plus complètement garantie.

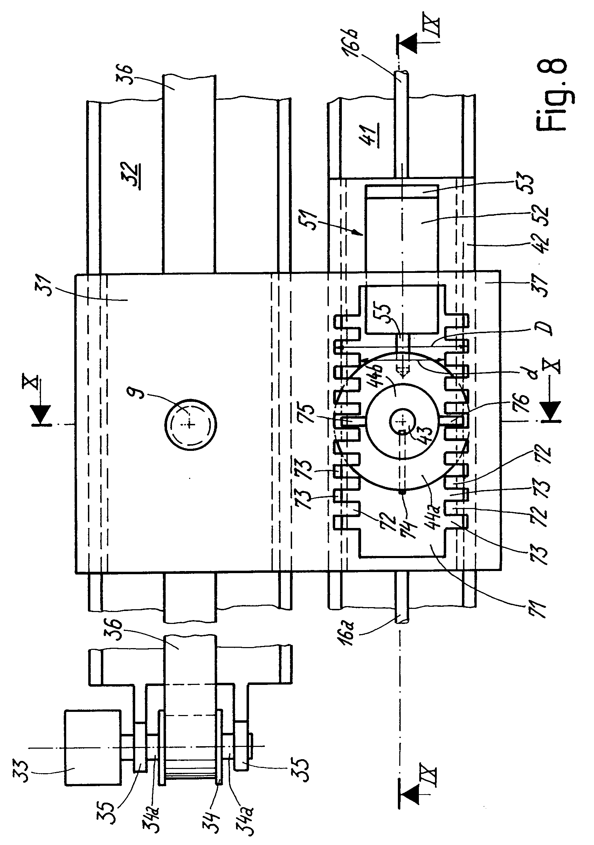

Les figures 8 à 12 illustrent schématiquement et partiellement une forme d'exécution du dispositif de la figure 1 qui permet d'éviter cet inconvénient.

Dans ces figures 8 à 12, les divers éléments désignés par les références 9, 16a, 16b, 31 à 37, 41 à 44, 48 et 51 à 60 sont semblables à ceux qui sont désignés par les mêmes références dans les figures 5 à 7 et ne seront pas décrits à nouveau.

En outre, dans cette forme d'exécution, le dispositif de la figure 1 comporte un circuit de surveillance 18 remplissant les mêmes fonctions que celles qui ont été mentionnées à propos de la forme d'exécution décrite à l'aide de ces figures 5 à 7.

Dans cette forme d'exécution, la plaque 37 est percée d'un logement 71 de forme générale rectangulaire, ayant deux côtés perpendiculaires à l'axe longitudinal de la glissière 41. Les deux autres côtés du logement 71 présentent des dents 72 disposées régulièrement et séparées par des espaces 73. Les dents 72 sont rectangulaires et ont toutes les mêmes dimensions, de sorte que toutes celles qui sont situées d'un même côté du logement 71 ont leurs sommets alignés les uns sur les autres. En outre, chaque dent 72 située d'un côté du logement 71 est disposée en regard d'une autre dent 72 située de l'autre côté de ce logement 71.

En outre, une goupille 74 traverse radialement la partie 44a de l'élément de couplage 44, et son extrémité interne est engagée dans un rainure 43a creusée dans la tige 43, parallèlement à l'axe de celle-ci, de manière que l'élément 44 ne puisse pas tourner autour de cette tige 43 mais seulement coulisser le long de cette dernière. Dans le même but, il est évidemment possible de donner à la tige 43 et au trou qui traverse l'élément de couplage 44 une forme non cylindrique, la rainure 43a et la goupille 74 pouvant alors être supprimées.

Deux autres goupilles 75 et 76 sont plantées de part et d'autre de la partie 44b de l'élément 44, dans le prolongement l'une de l'autre et sur un diamètre de cette partie 44b qui est perpendiculaire à l'axe longitudinal de la glissière 41. Le diamètre de ces goupilles 75 et 76 est légèrement inférieur à la largeur des espaces 73 qui séparent les dents 72, et leur longueur est telle que la distance qui sépare leurs extrémités extérieures est comprise entre les distances d et D qui séparent respectivement les sommets de deux dents 72 se faisant face de part et d'autre du logement 71 et les fonds de deux espaces 73 se faisant également face de part et d'autre de ce logement 71.

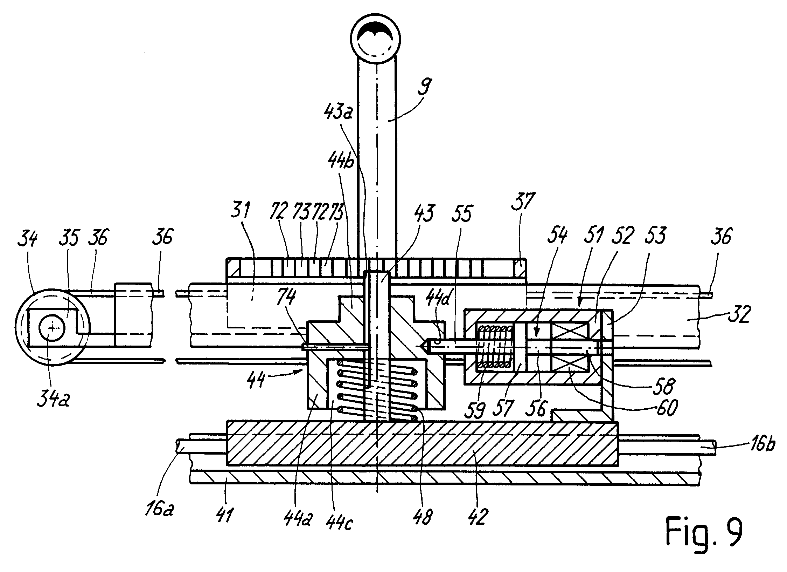

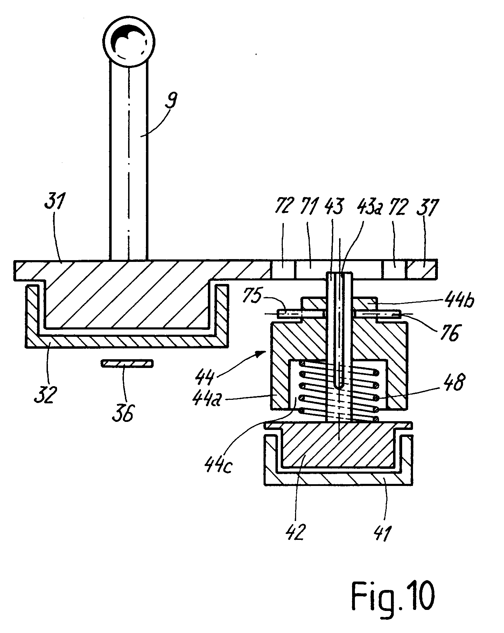

Comme dans la forme d'exécution décrite à l'aide des figures 5 à 7, l'élément de couplage 44 est retenu dans la position représentée aux figures 9 et 10 par la tige 55 qui est engagée dans le trou 44d tant que le dispositif d'asservissement DA fonctionne correctement, et il n'y a dans ce cas pas de liaison mécanique entre la manette 9 et les roues 1 et 2.

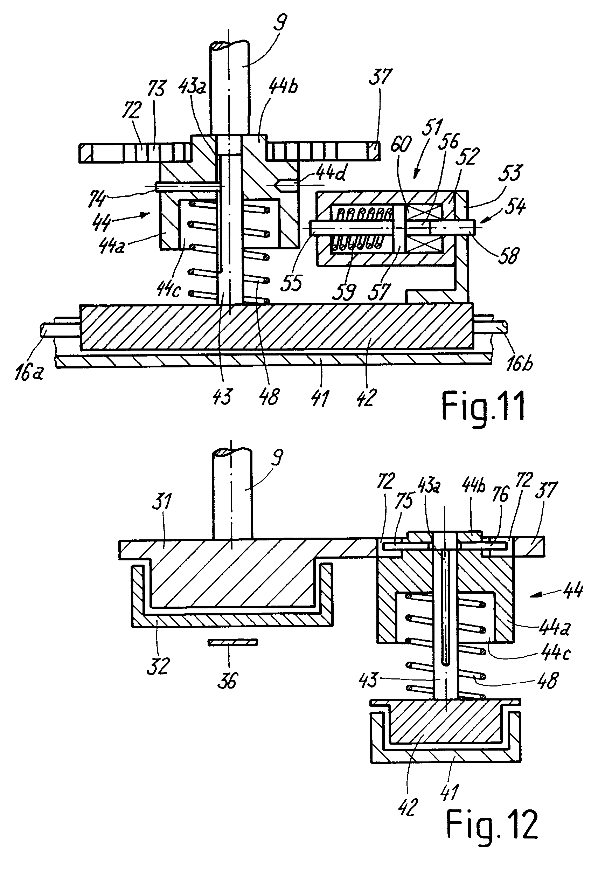

Lorsque le dispositif d'asservissement DA ne fonctionne plus correctement, le circuit de surveillance 18 interrompt l'alimentation de la bobine 60, ce qui permet au verrou 54 et à l'élément de couplage 44 de prendre la position représentée dans les figures 11 et 12.

Lorsque cet élément de couplage 44 prend cette position, les goupilles 75 et 76 s'introduisent chacune dans un espace 73, éventuellement après que le conducteur du véhicule a légèrement déplacé la manette 9, quelle que soit la position relative de la plaque 37 et du chariot 42. Dès que ces goupilles 75 et 76 se sont introduites chacune dans un des espaces 73, la manette 9 est liée mécaniquement aux roues 1 et 2 et le conducteur du véhicule reprend le contrôle de la direction de celui-ci, comme dans le cas des autres formes d'exécution décrites ci-dessus.

Pour faciliter l'introduction des goupilles 75 et 76 dans les espaces 73, il est possible de donner à la face des dents 72 qui est tournée vers le chariot 42 une forme adéquate, par exemple en V ou en portion de cylindre.

On voit que, dans cette forme d'exécution, le déplacement que le conducteur doit faire faire à la manette 9 pour reprendre le contrôle de la direction de son véhicule lorsque le dispositif d'asservissement DA ne fonctionne plus correctement est au plus égal à la somme de la largeur de l'une des dents 72 et de la moitié d'un des espaces 73. Ce déplacement est donc nettement plus faible que dans le cas des formes d'exécution décrites à l'aide des figures 2 à 4 et 5 à 7 lorsque le logement 38 a une forme allongée.

Dans une autre forme d'exécution, qui n'a pas été représentée et qui ne sera pas décrite en détail car elle est très semblable à celle qui vient d'être décrite, le logement ménagé dans la plaque 37 a la même forme générale rectangulaire que le logement 71 de la figure 8, mais ne présente qu'une série de dents semblables aux dents 72 et toutes situées du même côté de ce logement. En outre, une seule goupille semblable aux goupilles 75 et 76 est plantée dans l'élément de couplage 44, dans une position telle qu'elle peut s'introduire entre deux dents de la série de dents mentionnée ci-dessus lorsque cet élément de couplage 44 prend la position qu'il a dans les figures 11 et 12.

Dans toutes les formes d'exécution qui viennent d'être décrites, la manette 9 est liée mécaniquement à la crémaillère 3 lorsque le dispositif d'asservissement DA ne fonctionne pas correctement.

La force que le conducteur doit alors exercer sur la manette 9 pour diriger son véhicule peut donc être assez grande, notamment lorsque le véhicule est relativement lourd.

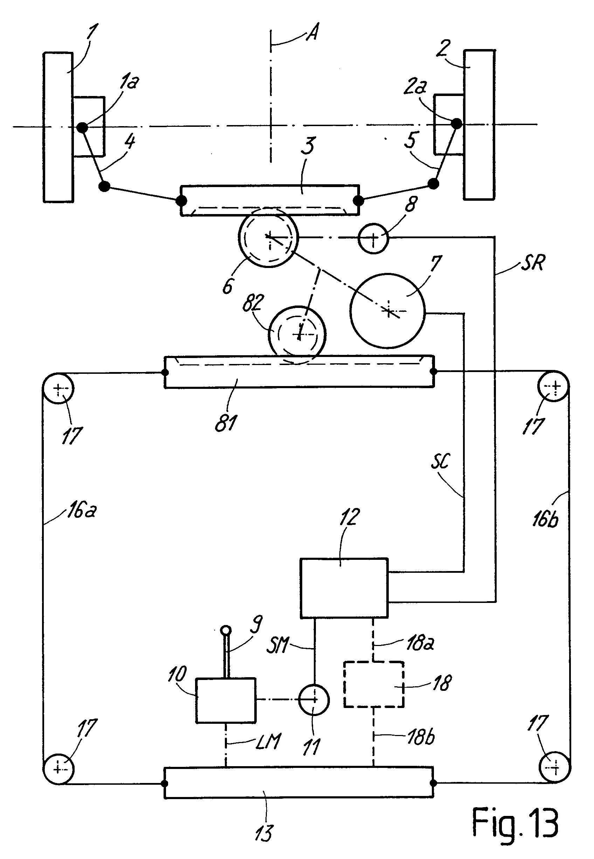

La figure 13 représente schématiquement et partiellement un véhicule comportant une forme d'exécution du dispositif de commande de direction grâce auquel cette force est diminuée.

Les divers éléments qui sont désignés par les références 1 à 13, 16a, 16b, 17 et 18 dans cette figure 13 sont semblables à ceux qui sont désignés par les mêmes références dans la figure 1 et ne seront pas décrits à nouveau.

Il faut noter que, dans cette figure 13, le dispositif d'asservissement DA formé par le moteur 7, les capteurs 8 et 11 et le circuit d'asservissement 12 n'a pas été entouré par un cadre en traits interrompus comme dans la figure 1, afin de ne pas compliquer inutilement cette figure 13.

Dans le dispositif de commande de cette figure 13, l'organe de couplage 13 n'est pas relié, par les câbles 16a et 16b, à la crémaillère 3, mais à une crémaillère auxiliaire 81 disposée, de préférence, à proximité de cette crémaillère 3.

Les dents de la crémaillère 81 sont en prise avec celles d'une roue dentée 82 qui est elle-même reliée mécaniquement au rotor du moteur 7, et donc à la roue dentée 6 et à la crémaillère 3, par un train d'engrenages symbolisé par un trait mixte. Dans certain cas, ce dernier train d'engrenages peut d'ailleurs être simplement constitué par une partie de celui qui relie le rotor du moteur 7 à la roue 6. Dans d'autres cas, la roue 82 peut être directement en prise avec la roue 6, ou même être coaxiale et solidaire avec cette dernière.

Dans tous les cas, les liaisons mécaniques entre le rotor du moteur 7, la roue 6 et la roue 82 sont agencées de manière que chaque déplacement de la crémaillère 3 correspond à un déplacement de plus grande amplitude de la crémaillère 81.

La force que le conducteur doit exercer sur la manette 9 pour diriger son véhicule lorsque le dispositif d'asservissement DA ne fonctionne pas correctement est donc plus faible que dans les formes d'exécution où l'organe de couplage 13 est relié par les câbles 16a et 16b directement à la crémaillère 3, d'un facteur égal au rapport entre les déplacements des crémaillères 3 et 81.

Dans cette forme d'exécution également, il est possible d'agencer les divers composants de manière que, lorsque le dispositif d'asservissement DA fonctionne correctement, chaque déplacement de la manette 9 entraîne un déplacement de même amplitude de l'organe de couplage 13. Dans un tel cas, cet organe de couplage 13 peut être semblable à ceux qui ont été décrits à l'aide des figures 2 à 7.

S'il n'est pas possible, ou pas désiré, de remplir cette condition, l'organe de couplage 13 peut évidemment être semblable à celui qui a été décrit à l'aide des figures 8 à 12.

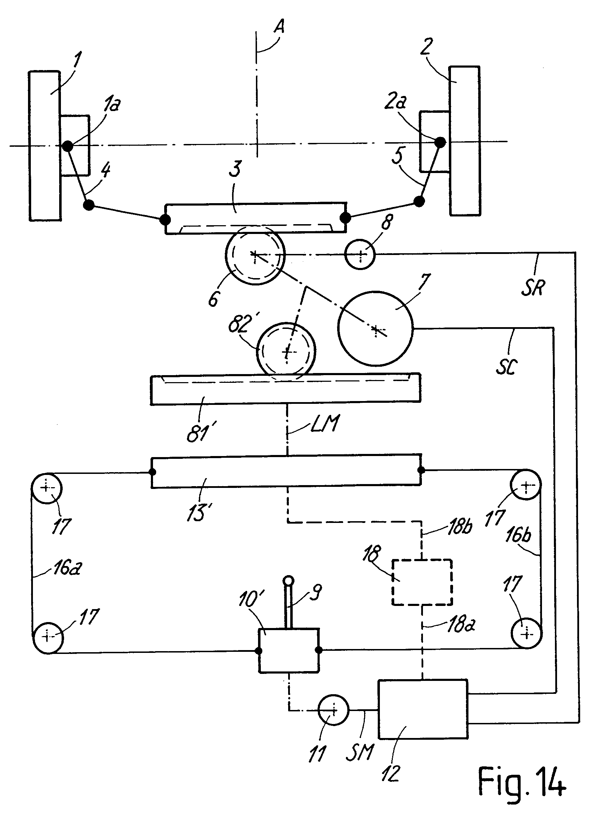

La figure 14 représente schématiquement et partiellement un véhicule comportant une autre forme d'exécution du dispositif de commande de direction selon la présente invention.

Les divers éléments représentés dans cette figure 14 avec les références 1 à 9, 11, 12, 16a, 16b, 17 et 18 sont semblables à ceux qui sont désignés par les mêmes références dans la figure 13 et ne seront pas décrits à nouveau.

Comme dans la figure 13, et pour la même raison, le dispositif d'asservissement DA formé par le moteur 7, les capteurs 8 et 11 et le circuit d'asservissement 12 n'a pas été entouré par un cadre en traits interrompus dans cette figure 14.

Dans cette forme d'exécution représentée par la figure 14, le support de la manette 9, désigné par la référence 10', coulisse dans une glissière, non représentée, comme le support 10 des formes d'exécution décrites ci-dessus, mais ce support 10' est lié directement à une extrémité de chacun des câbles 16a et 16b. Ce support 10' ne comporte en outre aucun élément semblable à la plaque 37 des formes d'exécution décrites ci-dessus.

Comme dans la forme d'exécution de la figure 13, le dispositif de commande de direction de la figure 14 comporte une crémaillère auxiliaire, désignée par la référence 81', qui est en prise avec une roue dentée 82' reliée mécaniquement au moteur 7 et à la crémaillère 3.

Les extrémités des câbles 16a et 16b opposées à celles qui sont fixées au support 10' sont reliées à un organe de couplage, désigné par la référence 13', qui coulisse dans une glissière, non représentée, disposée à proximité de la crémaillère 81' de manière que les directions de déplacement de cet organe de couplage 13' et de cette crémaillère 81' soient parallèles.

L'organe de couplage 13' peut être semblable à n'importe lequel de ceux qui ont été décrits ci-dessus à l'aide des figures 2 à 12. En outre, la crémaillère 81' est solidaire d'un élément semblable à la plaque 37 également décrite à l'aide de ces figures 2 à 12 et comportant, comme cette plaque 37, un logement dans lequel une partie de l'organe de couplage 13' est engagée, ou s'engage en cas de fonctionnement incorrect du dispositif d'asservissement DA, de manière à relier mécaniquement la manette 9 à la crémaillère 81' dans un tel cas.

Il est évident qu'une disposition analogue peut être adoptée si le dispositif de commande de direction ne comporte pas de crémaillère auxiliaire, comme celui qui est représenté par la figure 1. Dans un tel cas, l'organe de couplage, semblable à l'organe 13' de la figure 14, est disposé à proximité de la crémaillère unique, et c'est cette dernière qui est solidaire d'un élément semblable à la plaque 37 des figures 2 à 12. Une telle forme d'exécution n'a pas été représentée.

Dans les formes d'exécution décrites ci-dessus à l'aide des figures 1 à 13, l'organe de couplage 13 est relié aux câbles 16a et 16b, et la plaque 37 munie du logement 38 ou 71 est solidaire du support 10 de la manette 9. Dans d'autres formes d'exécution, cette disposition est inversée, c'est-à-dire qu'un organe de couplage, semblable à l'organe de couplage 13, est solidaire du support 10 de la manette 9, et un élément semblable à la plaque 37 est fixé aux câbles 16a et 16b. De telles formes d'exécution, qui sont évidemment équivalentes aux précédentes, n'ont pas été représentées et ne seront pas décrites plus en détail car leur réalisation ne pose pas de problème particulier.

Dans le cas de la forme d'exécution représentée par la figure 14, une inversion similaire peut être réalisée, c'est-à-dire qu'un organe de couplage semblable à l'organe 13' peut être solidaire de la crémaillère 81', ou de la crémaillère 3 si la crémaillère 81' n'existe pas, un élément semblable à la plaque 37 étant alors fixé aux câbles 16a et 16b. Cette forme d'exécution n'a pas non plus été représentée et ne sera pas décrite plus en détail.

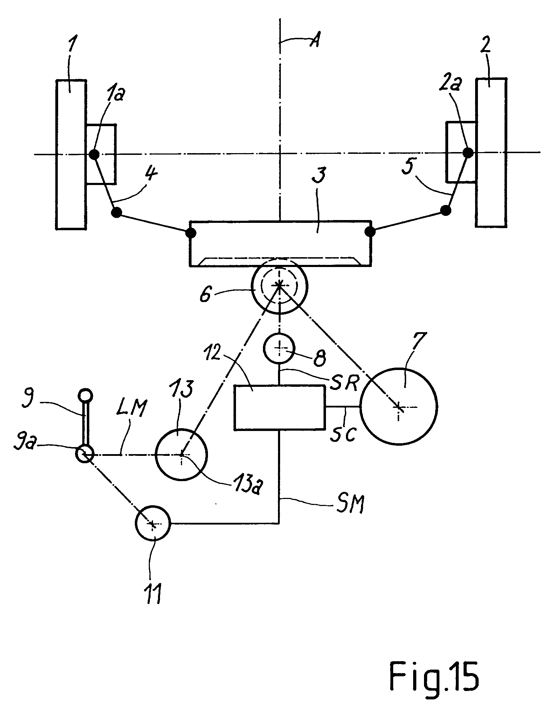

La figure 15 représente schématiquement un véhicule comportant une autre forme d'exécution du dispositif de commande de direction selon la présente invention.

Les divers éléments qui sont désignés dans cette figure 15 par les références 1 à 8 et 11 sont semblables à ceux qui sont désignés par les mêmes références dans la figure 1 et ne seront donc pas décrits à nouveau ici.

Comme dans les figures 13 et 14, et pour la même raison, le dispositif d'asservissement DA formé par le moteur 7, les capteurs 8 et 11 et le circuit d'asservissement 12 n'a pas été entouré d'un cadre en traits interrompus dans cette figure 15.

Dans cette forme d'exécution, le dispositif selon la présente invention comporte également une manette 9 et un organe de couplage 13 disposés à proximité l'un de l'autre et dont les fonctions sont similaires à celles de la manette 9 et de l'organe de couplage 13 des formes d'exécution décrites ci-dessus.

Mais contrairement à ces derniers, la manette 9 et l'organe de couplage 13 sont disposés et agencés de manière à pouvoir pivoter autour de deux axes désignés respectivement par 9a et 13a. Comme on le verra plus loin dans la description d'un exemple de réalisation de ces éléments 9 et 13, ces axes 9a et 13a sont alignés l'un avec l'autre.

L'organe de couplage 13 est relié mécaniquement à la roue dentée 6, et donc à la crémaillère 3, par un train d'engrenages qui n'a pas été représenté mais qui a été symbolisé par un trait mixte, de sorte qu'il tourne autour de son axe 13a en réponse à chaque pivotement des roues 1 et 2 autour de leurs axes 1a et 2a.

Le capteur 11 de la position de la manette 9, qui est évidemment relié mécaniquement à cette dernière, le circuit d'asservissement 12, le moteur 7, le train d'engrenages reliant ce dernier à la roue 6 et celui qui relie cette roue 6 à l'organe de couplage 13, sont agencés de manière que, lorsque tous ces éléments fonctionnent correctement, chaque déplacement angulaire de la manette 9 autour de l'axe 9a entraîne un déplacement angulaire de même sens et de même amplitude de l'organe de couplage 13 autour de l'axe 13a. On notera que ces déplacements angulaires sont effectués sans qu'il y ait de liaison mécanique directe entre cette manette 9 et cet organe de couplage 13.

Comme dans les formes d'exécution décrites précédemment, la manette 9 et l'organe de couplage 13 du dispositif de la figure 15 sont agencés de manière qu'une liaison mécanique s'établisse entre eux lorsque le dispositif d'asservissement DA ne fonctionne pas correctement. Cette liaison mécanique est également symbolisée dans la figure 15 par un trait mixte désigné par la référence LM.

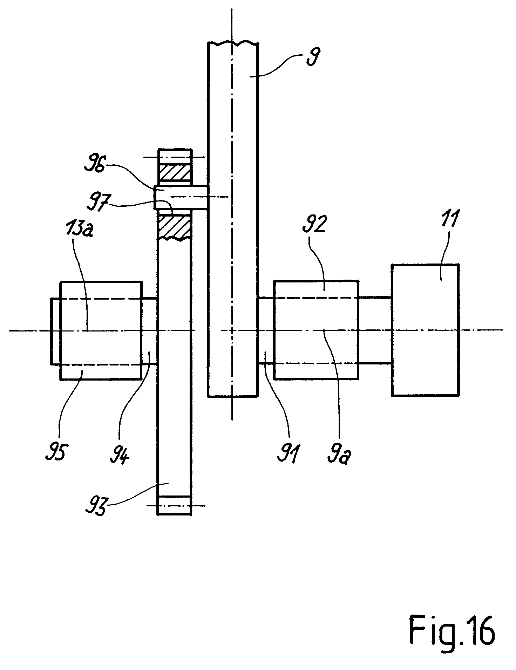

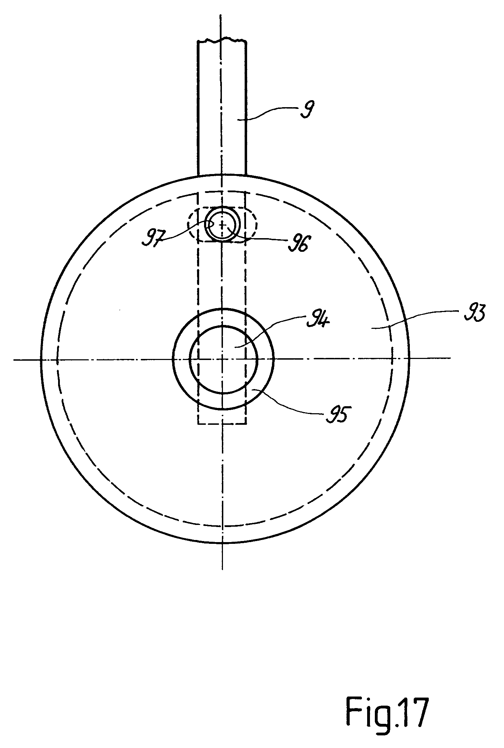

Dans l'exemple représenté schématiquement aux figures 16 et 17, la manette 9 est fixée à une première extrémité d'un arbre cylindrique 91 qui est monté pivotant dans un palier 92. Ce dernier est lui-même monté, par exemple, dans un des accoudoirs du siège du conducteur du véhicule de manière que l'axe de l'arbre 91, qui constitue l'axe de pivotement 9a de la manette 9, soit sensiblement parallèle à l'axe longitudinal A du véhicule (figure 15).

La partie mobile du détecteur de position 11 de la manette 9 est fixée à l'autre extrémité de l'arbre 91.

L'organe de couplage 13 est constitué par une roue dentée 93 fixée à une extrémité d'un arbre cylindrique 94 qui est monté pivotant dans un palier 95.

Les moyens de fixation de ces divers éléments entre eux et à leur emplacement n'ont pas été représentés car ils peuvent être de natures très diverses et sont bien connus des spécialistes.

Le palier 95 est lui-même monté de manière que l'axe de l'arbre 94, qui constitue l'axe de pivotement 13a de l'organe de couplage 13 (figure 15), soit aligné avec l'axe de pivotement 9a de la manette 9, et que la roue 93 soit située à proximité de la manette 9, mais sans être en contact avec celle-ci.

La roue dentée 93 est en prise avec la première roue, non représentée, du train d'engrenage qui la relie à la roue dentée 6 (figure 15).

Une tige cylindrique 96 est fixée à la manette 9 à une certaine distance de l'axe 9a, par des moyens non représentés, de manière que son axe soit perpendiculaire au plan de pivotement de cette manette 9 et qu'elle s'engage dans une ouverture 97 ménagée dans la roue 93.

Cette ouverture 97 est également cylindrique, et son diamètre est légèrement supérieur à celui de la tige 96.

En outre, les axes de la tige 96 et de l'ouverture 97 sont au moins sensiblement confondus et il n'y a donc aucune liaison mécanique directe entre la manette 9 et la roue 93 tant que le dispositif d'asservissement DA fonctionne correctement. Dans ce cas, en effet, chaque pivotement de la manette 9 entraîne un pivotement de même sens et de même amplitude de l'organe de couplage constitué par la roue 93.

Par contre, lorsque le dispositif d'asservissement DA ne fonctionne pas correctement et que le conducteur du véhicule fait pivoter la manette 9, la tige 96 vient en contact avec la paroi de l'ouverture 97 établissant ainsi la liaison mécanique LM mentionnée ci-dessus entre la manette 9 et l'organe de couplage 13. La force exercée sur cette manette 9 est alors transmise à la crémaillère 3 par l'intermédiaire de la roue 93 et du train d'engrenages qui relie cette dernière à la roue 6. Le conducteur garde donc le contrôle de la direction de déplacement de son véhicule.

Pour une raison semblable à celle qui a été mentionnée ci-dessus dans la description du dispositif de la figure 2, il est possible de donner à l'ouverture 96 une forme allongée comme cela a été représenté en traits interrompus à la figure 17.

Il est évident que, dans un dispositif tel que celui de la figure 15, la liaison mécanique LM entre la manette 9 et l'organe de couplage 13 en cas de fonctionnement incorrect du dispositif d'asservissement DA peut également être assurée par des éléments semblables à ceux qui ont été décrits à l'aide des figures 5 à 12.

Il est en outre également évident que la liaison mécanique entre l'organe de couplage 13 du dispositif de la figure 15 et la roue 6 peut être assurée par des moyens différents d'un train d'engrenages, par exemple par un train de poulies reliées par des courroies, de préférence crantées.

De nombreuses autres modifications peuvent encore être apportées au dispositif de commande de direction selon la présente invention sans pour autant sortir du cadre de cette dernière. Notamment, l'organe de couplage et l'élément avec lequel il coopère pour relier mécaniquement la manette 9 aux roues directrices du véhicule peuvent avoir une constitution très différente de celles qui ont été décrites, tout en réalisant la même fonction.

Il est en outre évident que la présente invention s'applique sans difficulté à un véhicule comportant une seule roue directrice, ou un nombre de roues directrices supérieur à deux, ainsi qu'à un véhicule dans lequel l'organe de commande de direction n'est pas constitué par une manette telle que la manette 9 mais, par exemple, par un volant.

## Revendications

1. Dispositif de commande de direction d'un véhicule ayant au moins une roue directrice (1, 2) mobile angulairement par rapport à un axe de pivotement (1a, 2a) pour déterminer la direction de déplacement dudit véhicule, ledit dispositif de commande de direction comportant un organe de commande de direction (9) actionnable par le conducteur dudit véhicule pour diriger ledit véhicule et un dispositif d'asservissement électrique (DA) de la position angulaire de ladite roue (1, 2) à la position dudit organe de commande de direction (9) comprenant un premier détecteur de position (8) couplé mécaniquement à ladite roue (1, 2) pour produire un premier signal de détection (SR) représentatif de la position angulaire de ladite roue (1, 2) par rapport audit axe de pivotement (1a, 2a), un deuxième détecteur de position (11) couplé mécaniquement audit organe de commande de direction (9) pour produire un deuxième signal de détection (SM) représentatif de la position dudit organe de commande de direction (9), des moyens moteurs (7) couplés mécaniquement à ladite roue (1, 2) pour la faire pivoter autour dudit axe de pivotement (1a, 2a) en réponse à un signal de commande (SC), et un circuit d'asservissement (12) produisant ledit signal de commande (SC) en réponse audit premier (SR) et audit deuxième signal de détection (SM), caractérisé par le fait qu'il comporte en outre des premiers moyens (10; 10', 13') reliés mécaniquement audit organe de commande de direction (9), des deuxièmes moyens (13; 81') reliés mécaniquement à ladite roue (1, 2), et des moyens de couplage (LM) pour relier mécaniquement lesdits premiers moyens (10; 10', 13') et lesdits deuxièmes moyens (13; 81') en cas de fonctionnement incorrect dudit dispositif d'asservissement (DA).

2. Dispositif de commande de direction selon la revendication 1, caractérisé par le fait :
- que lesdits premiers moyens comportent un premier organe mécanique (31, 37) solidaire dudit organe de commande de direction (9),
- que lesdits deuxièmes moyens comportent un deuxième organe mécanique (42) disposé à proximité dudit premier organe mécanique (31, 37) et relié mécaniquement à ladite roue (1, 2), et des moyens (41) pour guider ledit deuxième organe mécanique (42) de manière que ses déplacements en réponse aux pivotements de ladite roue (1, 2) soient parallèles aux déplacements dudit premier organe mécanique (31, 37), et
- que lesdits moyens de couplage (LM) comportent un logement (38, 71) ménagé dans l'un desdits premier (31, 37) et deuxième (42) organes mécaniques et des moyens (43; 44) solidaires de l'autre desdits premier (31, 37) et deuxième (42) organes mécaniques et destinés à coopérer avec ledit logement (38, 71) pour relier mécaniquement lesdits premiers moyens (10; 10', 13') et lesdits deuxièmes moyens (13; 81') en cas de fonctionnement incorrect dudit dispositif d'asservissement (DA).

3. Dispositif de commande de direction selon la revendication 2, caractérisé par le fait que lesdits moyens solidaires de l'autre desdits premier (31, 37) et deuxième (42) organes mécaniques sont constitués par une tige (43) engagée au moins partiellement dans ledit logement (38).

4. Dispositif de commande de direction selon la revendication 3, caractérisé par le fait que ledit logement (38) et ladite tige (43) sont cylindriques et coaxiaux.

5. Dispositif de commande de direction selon la revendication 3, caractérisé par le fait que ledit logement (38) est allongé selon la direction de déplacement desdits premier (31, 37) et deuxième (42) organes mécaniques.

6. Dispositif de commande de direction selon la revendication 2, caractérisé par le fait que lesdits moyens (43, 44) solidaires de l'autre desdits premier (31, 37) et deuxième (42) organes mécaniques comportent un élément de couplage mobile (44) et un organe de verrouillage (51) coopérant avec ledit élément de couplage (44) pour le maintenir dans une première position où il n'est pas engagé dans ledit logement (38, 71) lorsque ledit dispositif d'asservissement (DA) fonctionne correctement et pour le libérer lorsque ledit dispositif d'asservissement (DA) ne fonctionne pas correctement, lesdits moyens de couplage (LM) comportant en outre des moyens élastiques (48) agissant sur ledit élément de couplage (44) pour l'amener, lorsqu'il est libéré par ledit organe de verrouillage (51), dans une deuxième position où il est au moins partiellement engagé dans ledit logement (38, 71).

7. Dispositif de commande de direction selon la revendication 6, caractérisé par le fait que ledit logement (38) et la partie (44b) dudit élément de couplage (44) qui est engagée dans ledit logement (38) lorsque ledit élément de couplage (44) est dans sa deuxième position sont cylindriques et coaxiaux.

8. Dispositif de commande de direction selon la revendication 6, caractérisé par le fait que ledit logement (38) est allongé selon la direction de déplacement desdits premier (31, 37) et deuxième (42) organes mécaniques.

9. Dispositif de commande de direction selon la revendication 6, caractérisé par le fait :
- que ledit logement (71) a la forme générale d'un rectangle ayant deux côtés perpendiculaires à la direction de déplacement desdits premier (31, 37) et deuxième (42, 43) organes mécaniques, un des deux autres côtés dudit logement (71) comportant une pluralité de dents (72) disposées régulièrement, ayant la forme générale d'un rectangle dont deux côtés sont perpendiculaires à la direction de déplacement desdits premier (31, 37) et deuxième (42, 43) organes mécaniques, et séparées les unes des autres par des espaces (73), et
- que lesdits moyens de couplage (LM) comportent une goupille (75, 76) plantée dans la partie (44b) dudit élément de couplage (44) qui est engagée dans ledit logement (71) lorsque ledit élément de couplage (44) est dans sa deuxième position, ladite goupille (75, 76) étant disposée de manière à s'engager alors dans l'un desdits espaces (73).

10. Dispositif de commande de direction selon la revendication 9, caractérisé par le fait que l'autre côté dudit logement (71) comporte une deuxième pluralité desdites dents (72), chaque dent (72) de l'une desdites pluralité de dents (72) étant disposée en regard d'une dent (72) de l'autre pluralité de dents (72), et que lesdits moyens de couplage (LM) comportent une deuxième goupille (75, 76) plantée également dans ladite partie (44b) dudit élément de couplage (44) et disposée de manière à s'engager dans l'un des espaces (73) séparant lesdites dents (72) de ladite deuxième pluralité de dents (71).

11. Dispositif de commande de direction selon la revendication 6, caractérisé par le fait ledit organe de verrouillage (51) comporte un verrou (54) comprenant une première tige (55) engagée dans une ouverture (44d) ménagée dans ledit élément de couplage (44) pour maintenir ledit élément de couplage (44) dans sa première position, une deuxième tige (58) en un matériau magnétique doux, solidaire de ladite première tige (55), des moyens élastiques (59) exerçant une première force sur ledit verrou (51) pour faire sortir ladite première tige (55) de ladite ouverture (44d), et une bobine (60) entourant au moins une partie de ladite deuxième tige (58) et produisant un champ magnétique en réponse à un courant, et par le fait qu'il comporte en outre un circuit de surveillance (18) agencé de manière à appliquer ledit courant à ladite bobine (60) et à interrompre ledit courant selon que le dispositif d'asservissement (DA) fonctionne correctement et, respectivement, ne fonctionne pas correctement, ladite bobine (60), ladite deuxième tige (58) et ledit circuit de surveillance (18) étant en outre agencés de manière que ledit champ magnétique exerce sur ladite deuxième tige (58) une deuxième force opposée et supérieure à ladite première force.

12. Dispositif de commande de direction selon la revendication 1, caractérisé par le fait que lesdits moyens moteurs (7) sont reliés à ladite roue directrice (1, 2) par des moyens de liaison mécanique comportant une première roue dentée (6) reliée mécaniquement auxdits moyens moteurs (7) et une première crémaillère (3) ayant des dents en prise avec les dents de ladite première roue dentée (6) et reliée mécaniquement à ladite roue directrice (1, 2) de manière que tout déplacement longitudinal de ladite première crémaillère (3) entraîne un pivotement correspondant de ladite roue directrice (1, 2), et par le fait qu'il comporte des moyens (16a, 16b; 16a, 16b, 81, 82) pour relier mécaniquement lesdits deuxièmes moyens (13) à ladite première crémaillère (3).

13. Dispositif de commande de direction selon la revendication 12, caractérisé par le fait que lesdits moyens pour relier mécaniquement lesdits deuxièmes moyens (13) à ladite première crémaillère (3) comportent au moins un organe de liaison souple (16a, 16b) ayant deux extrémités respectivement fixées auxdits deuxièmes moyens (13) et à ladite première crémaillère (3).

14. Dispositif de commande de direction selon la revendication 12, caractérisé par le fait que lesdits moyens pour relier mécaniquement lesdits deuxièmes moyens (13) à ladite première crémaillère (3) comportent une deuxième roue dentée (82) reliée mécaniquement auxdits moyens moteurs (7), une deuxième crémaillère (81) ayant des dents en prise avec les dents de ladite deuxième roue dentée (82), et au moins un organe de liaison souple (16a, 16b) ayant deux extrémités respectivement fixées auxdits deuxièmes moyens (13) et à ladite deuxième crémaillère (81).

15. Dispositif de commande de direction selon la revendication 14, caractérisé par le fait que lesdites première (6) et deuxième (82) roues dentées, leurs liaisons respectives avec lesdits moyens moteurs (7), et lesdites première (3) et deuxième (81) crémaillères sont agencées de manière que tout déplacement longitudinal de ladite première crémaillère (3) correspond à un déplacement longitudinal de plus grande amplitude de ladite deuxième crémaillère (81).

16. Dispositif de commande de direction selon la revendication 1, caractérisé par le fait que lesdits moyens moteurs (7) sont reliés à ladite roue directrice (1, 2) par des moyens de liaison mécanique comportant une première roue dentée (6) reliée mécaniquement auxdits moyens moteurs (7) et une première crémaillère (3) ayant des dents en prise avec les dents de ladite première roue dentée (6) et reliée mécaniquement à ladite roue directrice (1, 2) de manière que tout déplacement longitudinal de ladite première crémaillère (3) entraîne un pivotement correspondant de ladite roue directrice (1, 2), par le fait que lesdits premiers moyens comportent un organe mécanique (13') relié mécaniquement audit organe de commande de direction (9), et des moyens (LM; LM, 81', 82') comportant lesdits moyens de couplage (LM), pour relier ledit organe mécanique (13') à ladite première crémaillère (3).

17. Dispositif de commande de direction selon la revendication 16, caractérisé par le fait que ledit organe mécanique (13') est relié mécaniquement audit organe de commande de direction (9) par des moyens (10, 16a, 16b) comportant au moins un organe de liaison souple (16a, 16b).

18. Dispositif de commande de direction selon la revendication 16, caractérisé par le fait que lesdits moyens pour relier ledit organe mécanique (13') à ladite première crémaillère (3) sont constitués par lesdits moyens de couplage (LM).

19. Dispositif de commande de direction selon la revendication 16, caractérisé par le fait que lesdits moyens pour relier ledit organe mécanique (13') à ladite première crémaillère (3) comportent une deuxième roue dentée (82') reliée mécaniquement auxdits moyens moteurs (7) et une deuxième crémaillère (81') ayant des dents en prise avec les dents de ladite deuxième roue dentée (82'), et par le fait que lesdits moyens de couplage (LM) sont agencés de manière à relier ledit organe mécanique (13') à ladite deuxième crémaillère (81').

20. Dispositif de commande de direction selon la revendication 19, caractérisé par le fait que lesdites première (6) et deuxième (82') roues dentées, leurs liaisons respectives avec lesdits moyens moteurs (7), et lesdites première (3') et deuxième (81') crémaillères sont agencées de manière que tout déplacement longitudinal de ladite première crémaillère (3') correspond à un déplacement longitudinal de plus grande amplitude de ladite deuxième crémaillère (81').
